# EUROPÄISCHE PATENTSCHRIFT

(11) **EP 0 798 937 B1**
(45) Veröffentlichungstag und Bekanntmachung des Hinweises auf die Patenterteilung: **10.10.2001**
(21) Anmeldenummer: 97200844.5
(22) Anmeldetag: 21.03.1997
(51) Int. Cl.: H04N 9/804, H04N 5/91, H04N 5/253

(54) **Archivierungssystem für kinematographische Filme und Verfahren**
Archiving system for cinematographic films and method
Système pour archiver des films cinématographiques et méthode

(30) Priorität: 29.03.1996 DE 19612530
(43) Veröffentlichungstag der Anmeldung: 01.10.1997
(73) Patentinhaber: Philips Corporate Intellectual Property GmbH, 52064 Aachen (DE); Koninklijke Philips Electronics N.V., 5621 BA Eindhoven (NL)
(72) Erfinder: Christmann, Mike, Röntgenstrasse 24, 22335 Hamburg (DE); Fach, Reinhard, Röntgenstrasse 24, 22335 Hamburg (DE); Brösamle, Michael, Röntgenstrasse 24, 22335 Hamburg (DE); Poetsch, Dieter, Prof., Röntgenstrasse 24, 22335 Hamburg (DE)
(74) Vertreter: Schmalz, Günther, Dipl.-Ing.

(56) Entgegenhaltungen:
- WO-A-95/32582
- DE-A- 4 323 525
- DE-U- 29 519 279
- D. POETSCH: "Vom analogen Filmabtaster zur digitalen Multistandard-Nachbearbeitung" FERNSEH UND KINOTECHNIK., Bd. 49, Nr. 9, September 1995, Seiten 502-509, XP000528918 HEIDELBERG DE
- H. VAANHOLT: "BOLERO, a digital HD Production" 18TH INTERNATIONAL TELEVISION SYMPOSIUM AND TECHNICAL EXHIBITION, 10. - 15. Juni 1993, Seiten 421-431, XP000385306 MONTREUX CH

## Beschreibung

Die Erfindung betrifft ein Archivierungssystem für kinematographische Filme sowie ein Verfahren zur Herstellung eines hochaufgelösten digitalen Masters für die Archivierung von kinematographischen Filmen sowie zu deren Umwandlung in verschiedene TV- und Multimedia-Standards, wobei die gesamte dem kinematographischen Film zugeordnete Bild- und Toninformation hochauflösend abgetastet, digitalisiert und abgespeichert wird.

Derzeit wird ein hochaufgelöster digitaler Film-Master nur in Ausnahmefällen zur Restaurierung und Rückbelichtung auf Film hergestellt, siehe dazu J. Ristow "Restaurierung von Filmen mit elektronischen Methoden" Seite 484 ff. in der DE-Zeitschrift FKT 9/1995. Das sogenannte Mastern von Filmen für TV-Anwendungen wird heute häufig durch direkte Videoüberspielung von Filmen auf Magnetband im jeweiligen TV-Standard und Bildformat mit Farbkorrektur durchgeführt, siehe dazu beispielsweise den Beitrag "Elektronische Restaurierung von Filmen für die Fernsehwiedergabe" auf Seite 488 der DE-Zeitschrift FKT 9/1995.

Diese Verfahren haben jedoch den Nachteil, daß die Qualität nur der jeweiligen Bearbeitung, dem TV-Standard und dem Format der Magnetaufzeichnung entspricht. Weiterhin muß für jeden unterschiedlichen TV-Standard (625 Zeilen bzw. 525 Zeilen; Pal, NTSC und für jedes Bildformat 16:9 bzw. 4:3, CinemaScope, Letterbox, usw.) eine erneute Überspielung des Filmes durchgeführt werden, was einen großen Zeitaufwand erfordert. Außerdem muß - wenn der Film nur als ungeschnittenes Negativ vorliegt - zusätzlich eine erneute Schnittbearbeitung auf der Video-Ebene durchgeführt werden. Da immer auf den Original-Film - ohne echte Restaurierung - zurückgegriffen wird, ist das Ergebnis abhängig vom Zustand dieses Filmes.

Zur Vermeidung dieser Nachteile, ist in dem Aufsatz "Vom analogen Filmabtaster zur digitalen Multistandard-Nachbearbeitung" von D. Poetsch in der DE-Zeitschrift FKT 9/1995, Seite 502 ff., insbesondere Seite 508 ein Vorschlag zur Archivierung und Film-Mastering mit Farbkorrektur und anschließender Konvertierung zur Vermarktung in unterschiedlichen TV- und Multimedia-Formaten angegeben. Danach kann der gesamte Spielfilm von 90 Minuten Dauer nach einer verlustlosen Kompression auf einem Disk-Server gespeichert und zur Langzeit-Archivierung auf einen Bandspeicher überspielt werden. Bei der Auswertung gelangen die Bilddaten nach Dekompression und Format-Konvertierung zur Bandaufzeichnung oder zur Übertragungsstrecke.

Aus DE 295 19 279.8 ist ferner eine Vorrichtung zur Speicherung von Bildern eines kinematographischen Films mit einer Einrichtung zur bildpunktweisen Umwandlung des gesamten Bildinhaltes der Filmbilder ohne Einschränkung in ein digitales Datensignal und einer Speichereinrichtung zur Aufzeichnung und Wiedergabe der digitalen Datensignale bekannt, bei welcher zur Echtzeitfähigkeit eine parallele Datensignalverarbeitung und -übertragung vorgesehen ist. Dabei soll beispielsweise für Archivierungszwecke ein von den Fernseh-Standards unabhängiger Zwischenstandard des digitalisierten Films hergestellt werden.

WO 95/32582 zeigt Video-Bearbeitung am Bildschirm. Dabei werden Daten zur Änderung generiert und die Änderungen erst durchgeführt, wenn der Film zum Video-Medium übertragen wird.

Der Erfindung liegt die Aufgabe zugrunde, ein Verfahren der eingangs genannten Art anzugeben, mit dem von kinematographischen Filmen ein elektronisches Duplikat in hoher Qualität abgeleitet und dokumentensicher archiviert werden kann. Mittels einer dabei durchgeführten Restaurierung des kinematographischen Films soll dann der Film-Master dem Originalzustand des Filmes zum Zeitpunkt der Herstellung entsprechen. Vom digitalen Master sollen später unterschiedliche TV- und Multimedia-Versionen hergestellt werden können. Eine Rücküberspielung auf Film sollte zusätzlich möglich sein.

Die Lösung dieser Aufgabe wird dadurch erreicht, daß zusätzlich zu den digitalen Bild- und Tondaten Vorschriften für Bearbeitungsprozesse und -Parameter dem entsprechenden Filmbild zugeordnet abgespeichert und zur Herstellung unterschiedlicher Versionen des digitalisierten Films verwendet werden.

Die Erfindung wird durch die Ausprüche definiert.

Die Erfindung hat den Vorteil, daß die gewünschten unterschiedlichen TV- und Multimedia-Versionen durch die notwendigen Bearbeitungsprozesse von den mitgespeicherten Vorschriften gesteuert automatisch erstellt werden. Dadurch ist auch ein wesentlich geringerer Speicherbedarf notwendig als bei der Archivierung mehrerer unterschiedlicher Versionen, da nur das Original und die Vorschriften abgespeichert werden müssen. Weiterhin ist vorteilhaft, daß das Filmoriginal nicht durch die verschiedenen Versionen verändert wird. Außerdem ist hierbei ein verlustfreies Kopieren des Masters möglich. Ein weiterer Vorteil besteht darin, daß das elektronische Duplikat des Originalfilms keinen weiteren Alterungsprozessen unterworfen ist.

Besonders vorteilhaft ist, daß von den Daten des digitalisierten Films ein hochkomprimierter Datensatz abgeleitet wird, welcher zur schnellen Sichtung des archivierten Masters sowie der unterschiedlichen Versionen dient.

Durch die in den Unteransprüchen aufgeführten Maßnahmen sind vorteilhafte Weiterbildungen und Verbesserungen der im Hauptanspruch angegebenen Erfindung möglich. In weiteren Unteransprüchen ist eine vorteilhafte Anordnung zur Durchführung des erfindungsgemäßen Verfahrens angegeben.

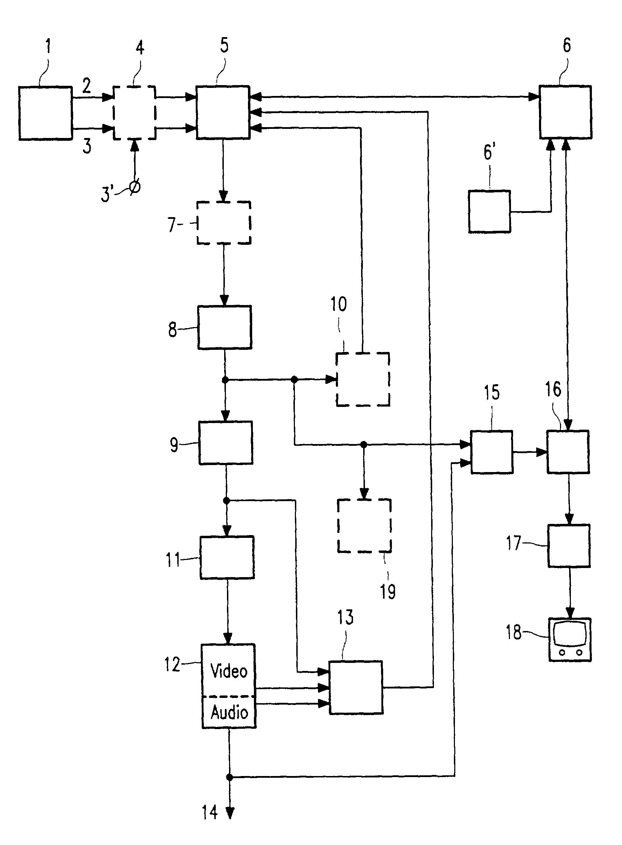

Ein Ausführungsbeispiel der Erfindung soll nunmehr anhand eines in der Zeichnung dargestellten Blockschaltbildes näher erläutert werden.

In einem hochauflösenden Echtzeit-Filmabtaster 1 wird ein kinematographischer Film elektronisch abgetastet, indem die optische Information der Filmbilder in elektrische Bildsignale umgewandelt und diese danach in digitale Datensignale gewandelt werden. Die zu den Filmbildern zugehörige Toninformation wird ebenfalls abgetastet, digitalisiert und in ein Tondatensignal gewandelt. Diese Bild- und Ton-Datensignale werden an den Ausgängen 2 und 3 des Filmabtasters 1 abgenommen und - gegebenenfalls über eine verlustlose Datenkompressionsstufe 4 - einem Plattenspeicher 5 (Disk-Server) zugeführt. An der Kompressionsstufe 4 ist ein weiterer Eingang 3' vorgesehen, an dem ein weiteres Tondatensignal, beispielsweise von einer Magnetaufzeichnungsanlage, angelegt werden kann. Der Plattenspeicher 5 dient dabei zur zeitweiligen Speicherung eines Film-Masters, also eines Originalfilms, von dem dann Filmkopien oder Videobandkopien angefertigt werden können. Die Speichereinrichtung 5 steht mit einer weiteren Speichereinrichtung 6, einem sogenannten Archivspeicher, in Verbindung, in der eine Vielzahl von Film-Mastern abgelegt bzw. archiviert werden können. Mit einer dem Archivspeicher 6 zugeordneten Einrichtung 6' können Verwaltungsdaten für die Archivierung, z.B. Zusatzdaten (wie Titel), Archivierungskriterien (wie Querverweise), Sicherungscodes und gegebenenfalls kurze Zusammenfassungen der Filme, erzeugt werden.

Für die Restaurierung von fehlerhaften bzw. beschädigten Filmen ist an einem weiteren Ausgang der Speichereinrichtung 5 - gegebenenfalls über eine Dekompressionsstufe 7 - eine Einrichtung 8 zur Bild- und Ton-Fehlerrestaurierung angeschlossen. Damit kann der in der Speichereinrichtung 5 abgespeicherte Film Bild für Bild bzw. Szene für Szene bezüglich der Bild- und der Toninformation restauriert werden. Am Ausgang dieser Einrichtung 8 ist dann ein Formatkonverter 9 zur Umwandlung der digitalen Datensignale in TV- oder Multimedia-Signale vorgesehen. Der Ausgang der Einrichtung 8 ist weiterhin - gegebenenfalls über eine weitere verlustlose Datenkompressionsstufe 10 - an einen weiteren Eingang der Speichereinrichtung 5 rückgeführt. Somit kann der restaurierte Film-Master gegebenenfalls nochmals zwischengespeichert werden.

Am Ausgang des Formatkonverters 9 ist eine weitere Platten-Speichereinrichtung 11 (Disk-Server) für die bildweise Zwischenspeicherung und Festlegung der zu korrigierenden Filmausschnitte vorgesehen. Danach ist eine Einrichtung zur Durchführung von verschiedenen Bearbeitungsprozessen, wie beispielsweise Farbkorrektur einzelner Szenen für die konvertierten Formate, gegebenenfalls Bildgrößenänderung sowie Tonbearbeitungen, wie zum Beispiel mehrsprachige Versionen, Geräusch- und Musikeinblendungen vorgesehen. Diese durchgeführten Bearbeitungsprozesse werden in einer Einrichtung 13 zur Erstellung von Listen der Verarbeitungsvorschriften zugeführt. Der Ausgang 14 der Einrichtung 12 bildet den Ausgang der Anordnung, an dem die gewünschten TV- und Multimedia-Signale abnehmbar sind. Ein weiterer Eingang der Einrichtung 13 ist mit dem Ausgang des Formatkonverters 9 verbunden. Der Ausgang der Einrichtung 13 ist an einen zusätzlichen Eingang der Speichereinrichtung 5 geführt.

Sowohl der Ausgang der Einrichtung 8 zur Fehlerrestaurierung als auch der Ausgang 14 der Einrichtung 12 sind an Eingänge einer Kompressionseinrichtung 15 zur Ableitung hochkomprimierter Datensätze angeschlossen. Der Ausgang der Kompressionseinrichtung 15 ist an einen Eingang eines sogenannten Browsing-Servers 16 angeschlossen, mit dem somit eine schnelle Sichtung sowohl des restaurierten Films als auch eines zu übertragenden Videofilms möglich ist. Ein weiterer Eingang des Browsing-Servers 16 steht mit der Speichereinrichtung 6 in Verbindung, so daß auch die archivierten Browsing-Master dem Browsing-Server 16 zur schnellen Sichtung zugeführt werden können. An einem Ausgang des Browsing-Servers 16 ist über eine Dekompressionsstufe 17 ein Monitor 18 zur Bild- und Ton-Wiedergabe für die schnelle Sichtung des jeweiligen Filmmaterials vorgesehen.

Am Ausgang der Einrichtung 8 zur Fehlerrestaurierung ist gegebenenfalls ein Filmrecorder 19 anschließbar, mit welchem ein neuer Film als restaurierte Kopie des Film-Masters auf einen kinematographischen Filmstreifen aufgenommen werden kann.

Die Überspielung der Bild- und Ton-Datensignale sowie der Zusatzinformationen für die Filmbearbeitung und von Sicherungscodes auf die Speichereinrichtung 6 ist deshalb vorteilhaft, da eine Änderung bzw. Verfälschung der zu archivierenden Datensignale verhindert wird und somit eine Wahrung der Dokumentenechtheit gesichert ist. Eine Rücküberspielung der Datensignale aus der Speichereinrichtung 6 bzw. der Speichereinrichtung 5 mit den Zusatzinformationen, die voll automatisch die gespeicherten Prozesse (wie Formatauswahl, Farbkorrektur, TV-Standard, usw.) an den Daten ausführen, ermöglicht die Lieferung eines kompletten Video-Produktes am Ausgang 14.

## Patentansprüche

1. Archivierungssystem für kinematographische Filme, eine Einrichtung (1) zur bildpunktweisen Umwandlung des gesamten Bildinhaltes der Filmbilder in ein digitales Bilddatensignal sowie der zugehörigen Toninformationen in digitale Tondatensignale,
durch eine erste Speichereinrichtung (5) zur Aufzeichnung und Wiedergabe von digitalen Datensignalen, welcher die digitalen Bild- und Tondatensignale zur Zwischenspeicherung zugeführt werden,
durch eine zweite Speichereinrichtung (6) zur Aufzeichnung und Wiedergabe von digitalen Datensignalen, welcher die von der ersten Speichereinrichtung (5) abgegebenen digitalen Bild- und Tondatensignale und Vorschriften für Bearbeitungsprozesse und -Parameter zur Speicherung für Archivierungszwecke zugeführt werden,
durch eine an den Ausgang der ersten Speichereinrichtung (5) angeschlossene Einrichtung (8) zur Bild- und Ton-Fehlerrestaurierung,
durch einen nachfolgenden Formatkonverter (9) zur Umwandlung der digitalen Datensignale in TV- oder Mulitmedia-Signale,
durch eine anschließende Einrichtung (12) zur Durchführung von verschiedenen Bearbeitungsprozessen für Bild und Ton, an deren Ausgang (14) die entsprechend bearbeiteten Bild- und Tonsignale abnehmbar sind,
und durch eine mit dem Ausgang des Formatkonverters (9) verbundene und an einen weiteren Ausgang der Bearbeitungseinrichtung (12) angeschlossene Einrichtung (13) zur Erstellung von Listen der Bearbeitungsvorschriften, welche der ersten Speichereinrichtung (5) zugeleitet werden.

2. Archivierungssystem nach Anspruch 1 für kinematographische Filme, **dadurch gekennzeichnet,**
**daß** eine Einrichtung (6') zur Erzeugung von Archivierungsdaten vorgesehen ist, mit welcher die Zusatzdaten, Archivierungskriterien, Sicherungscodes und Zusammenfassungen erzeugt werden und daß diese Einrichtung mit einem weiteren Eingang der zweiten Speichereinrichtung (6) verbunden ist.

3. Archivierungssystem nach Anspruch 1 oder 2, **dadurch gekennzeichnet,**
**daß** eine Kompressionseinrichtung (15) zur Ableitung hochkomprimierter Datensätze vorgesehen ist, welche einerseits mit dem Ausgang der Einrichtung (8) zur Bild- und Ton-Fehlerrestaurierung und andererseits mit dem Ausgang (14) der Bearbeitungseinrichtung (12) zur Erzeugung der TV- und Multimedia-Signale verbunden ist, und daß ein sogenannter Browsing-Server (16) am Ausgang der Kompressionseinrichtung (15) angeschlossen ist, welcher einerseits mit der zweiten Speichereinrichtung (6) und andererseits über eine Dekompressionsstufe (17) mit einer Bild- und Ton-Wiedergabevorrichtung (18) verbunden ist.

4. Archivierungssystem nach Anspruch 1, 2, oder 3, **dadurch gekennzeichnet,**
**daß** zwischen der Einrichtung (1) zur Umwandlung der Filmbilder in Datensignale und der ersten Speichereinrichtung (5) eine Kompressionsstufe (4) zur verlustlosen Kompression der Datensignale angeordnet ist, und daß zwischen der ersten Speicheranordnung (5) und der Restaurierungseinrichtung (8) eine Dekompressionsstufe (7) vorgesehen ist.

5. Archivierungssystem nach Anspruch 1, 2, 3, oder 4, **dadurch gekennzeichnet,**
**daß** zwischen dem Ausgang der Restaurierungseinrichtung (8) und einem Eingang der ersten Speichereinrichtung (5) eine weitere Kompressionsstufe (10) zur verlustlosen Kompression der Datensignale angeordnet ist.

6. Verfahren zur Herstellung eines hochaufgelösten digitalen Masters für die Archivierung von kinematographischen Filmen sowie zu deren Umwandlung in verschiedene TV- und Multimedia-Standards, wobei die gesamte, dem kinematographischen Film zugeordnete Bild- und Toninformation hochauflösend abgetastet, digitalisiert und abgespeichert wird, **dadurch gekennzeichnet,**
**daß** zusätzlich zu den digitalen Bild- und Tondaten Vorschriften für Bearbeitungsprozesse und -Parameter dem entsprechenden Filmbild zugeordnet abgespeichert und zur Herstellung unterschiedlicher den verschiedenen TV- und Multimedia-Standards entsprechenden Versionen des digitalisierten Films verwendet werden.

7. Verfahren nach Anspruch 6, **dadurch gekennzeichnet,**
**daß** für die jeweilige Version des Films anhand des digitalen Masters die Vorschriften für Bearbeitungsprozesse und -Parameter festgelegt werden.

8. Verfahren nach Anspruch 6 oder 7, **dadurch gekennzeichnet,**
**daß** von den Daten des digitalisierten Films ein hochkomprimierter Datensatz als sogenannter Browsing-Master abgeleitet wird.

9. Verfahren nach Anspruch 6, 7 oder 8, **dadurch gekennzeichnet,**
**daß** bei der Archivierung der kinematographischen Filme außer den Bild- und Tondaten sowie den Vorschriften für Bearbeitungsprozesse und -Parameter weitere Zusatzinformationen, Archivierungskriterien, Sicherungscodes und gegebenenfalls kurze Zusammenfassungen für ein Verwaltungssystem mit Zuordnung von Master, Browsing-Master und den Versionen eines bestimmten Filmes in einem Archivspeicher abgelegt werden.

10. Verfahren nach Anspruch 9, **dadurch gekennzeichnet,**
**daß** Editierlisten der Filmteile erstellt werden, welche zur Zusammenstellung der unterschiedlichen Versionen dem Archivspeicher entnommen werden.

## Claims

1. An archiving system for cinematographic films, a device (1) for pixel-sequential conversion of the overall picture contents of the film frames into a digital picture data signal and the associated sound information into digital sound data signals,
a first storage device (5) for recording and reproducing digital data signals, which device receives the digital picture and sound data signals for temporary storage,
a second storage device (6) for recording and reproducing digital data signals, which device receives the digital picture and sound data signals supplied by the first storage device (5) and prescriptions for processing steps and parameters for filing purposes,
a device (8) for picture and sound restoration connected to the output of the first storage device (5),
a subsequent format converter (9) for converting the digital data signals into TV or multimedia signals,
a subsequent device (12) for performing different processing steps for picture and sound, having an output (14) at which the processed picture and sound signals can be derived,
and a device (13) for creating lists of processing prescriptions applied to the first storage device (5), which device (13) is connected to the output of the format converter (9) and to a further output of the processing device (12).

2. An archiving system for cinematographic films as claimed in claim 1, **characterized in that** a device (6') for generating filing data is provided with which the additional data, filing criteria, security codes and abstracts are created, and **in that** said device is connected to a further input of the second storage device (6).

3. An archiving system as claimed in claim 1 or 2, **characterized in that** a compression device (15) for deriving highly compressed sets of data is provided, which device is connected to the output of the device (8) for picture and sound restoration and to the output (14) of the processing device (12) for generating the TV and multimedia signals, and **in that** a browsing server (16) is connected to the output of the compression device (15), which browsing server is connected to the second storage device (6), and to a picture and sound reproduction device (18) via a decompression stage (17).

4. An archiving system as claimed in claim 1, 2 or 3, **characterized in that** a compression stage (4) for lossfree compression of the data signals is arranged between the device (1) for converting the film frames into data signals and the first storage device (5), and **in that** a decompression stage (7) is arranged between the first storage device (5) and the restoration device (8).

5. An archiving system as claimed in claim 1, 2, 3 or 4, **characterized in that** a further compression stage (10) for lossfree compression of the data signals is arranged between the output of the restoration device (8) and an input of the first storage device (5).

6. A method of manufacturing a high-resolution digital master for filing cinematographic films and their conversion into different TV and multimedia standards, in which method the overall picture and sound information associated with the cinematographic film is high-resolution scanned, digitized and stored, **characterized in that**, in addition to the digital picture and sound data, prescriptions for processing steps and parameters associated with the corresponding film frames are stored and used for manufacturing different digitized film versions corresponding to the various TV and multimedia standards.

7. A method as claimed in claim 6, **characterized in that**, for each film version, the prescriptions for processing steps and parameters are determined with reference to the digital master.

8. A method as claimed in claim 6 or 7, **characterized in that** a highly compressed set of data is derived as a browsing master from the data of the digitized film.

9. A method as claimed in claim 6, 7 or 8, **characterized in that**, in addition to the picture and sound data and the prescriptions for the processing steps and parameters, further additional information, filing criteria, security codes and possibly short abstracts for an administrative system, with the association of masters, browsing masters and the versions of a given film are stored in a file store when archiving the cinematographic films.

10. A method as claimed in claim 9, **characterized in that** editing lists of the film sections are created which are taken from the file store for composing the different versions.

## Revendications

1. Système d'archivage pour films cinématographiques,
**caractérisé**
**par** un dispositif (1) en vue de la transformation pixel par pixel de l'ensemble du contenu de l'image des images de film en un signal numérique de données d'image ainsi que des informations audio correspondantes en signaux de données audio numériques
par un premier dispositif de mémoire (5) en vue de l'enregistrement et de la lecture de signaux de données numériques auxquels sont amenés les signaux de données vidéo et audio numériques en vue de l'enregistrement intermédiaire
par un deuxième dispositif de mémoire (6) en vue de l'enregistrement et de la lecture des signaux de données numériques auxquels sont amenés les signaux de données vidéo et audio numériques délivrés par le premier dispositif de mémoire 5 et des consignes pour les processus et paramètres de traitement en vue de l'enregistrement à des fins d'archivage,
par un dispositif (8) raccordé à la sortie du premier dispositif de mémoire (5) en vue de la restauration des erreurs vidéo et audio:
par un convertisseur de format (9) suivant en vue de la transformation des signaux de données numériques en signaux multimédia ou TV,
par un dispositif (12) consécutif en vue de la mise en oeuvre de différents processus de traitement pour l'image et le son à la sortie duquel (14) les signaux audio et vidéo traités en conséquence peuvent être prélevés
et par un dispositif (13) relié à la sortie du convertisseur d'image (9) et raccordé à une sortie supplémentaire du dispositif de traitement (12) en vue de l'établissement de listes de consignes de traitement qui sont amenées au premier dispositif de mémoire (5).

2. Système d'archivage selon la revendication 1 pour des films cinématographiques,
**caractérisé en ce qu'**un dispositif (6') est prévu en vue de la production de données d'archivage avec lequel les données supplémentaires, les critères d'archivage, les codes de sécurité et les résumés sont produites et que ce dispositif est relié à une entrée supplémentaire du deuxième dispositif de mémoire (6).

3. Système d'archivage selon l'une des revendications 1 ou 2,
**caractérisé en ce qu'**un dispositif de compression (15) est prévu en vue de la dérivation de jeux de données à haute compression qui est relié, d'une part, à la sortie du dispositif (8) en vue de la restauration des erreurs vidéo et audio et, d'autre part, à la sortie (14) du dispositif de traitement (12) en vue de la production des signaux multimédia et TV et qu'un serveur dit de Browsing (16) est raccordé à la sortie du dispositif de compression (15) et est relié, d'une part, au deuxième dispositif de mémoire (6) et, d'autre part, par l'intermédiaire d'un étage de décompression (17) à un dispositif de reproduction de l'image et du son (18).

4. Système d'archivage selon l'une des revendications 1, 2 ou 3,
**caractérisé en ce qu'**entre le dispositif (1) en vue de la transformation des images de films en signaux de données et le premier dispositif de mémoire (5) est disposé un étage de compression (4) en vue de la compression sans perte des signaux de données et qu'entre le premier dispositif de mémoire (5) et le dispositif de restauration (8) il est prévu un étage de décompression (7).

5. Système d'archivage selon l'une des revendications 1, 2, 3 ou 4,
**caractérisé en ce qu'**entre la sortie du dispositif de restauration (8) et une entrée du premier dispositif de mémoire (5) est disposé un étage de compression (10) supplémentaire en vue de la compression sans perte des signaux de données.

6. Procédé de composition d'une version mastérisée numérique à haute résolution pour l'archivage de films cinématographiques et de transformation de celle-ci en différents standards TV et multimédia, toutes les informations audio et vidéo affectées au film cinématographique étant balayées, numérisées et enregistrées en haute résolution,
**caractérisé en ce**
**qu'**en plus des données audio et vidéo numériques, des prescriptions pour les processus et paramètres de traitement sont enregistrées en étant affectées à l'image de film correspondante et utilisées en vue de la fabrication de différentes versions du film numérisé correspondant aux différents standards TV et multimédia.

7. Procédé selon la revendication 6,
**caractérisé en ce**
**que** les prescriptions pour les processus et paramètres de traitement sont définies pour la version respective du film à l'aide de la version mastérisée numérique.

8. Procédé selon l'une des revendications 6 ou 7,
**caractérisé en ce**
**qu'**un jeu de données à haute compression est dérivé des données du film numérisé sous la forme d'une version mastérisée dite de browsing.

9. Procédé selon l'une des revendications 6, 7 ou 8,
**caractérisé en ce**
**que**, lors de l'archivage des films cinématographiques, des informations supplémentaires, des critères d'archivage, des codes de sécurité et, éventuellement, de brefs résumés pour un système d'administration avec affectation de la version mastérisée, de la version mastérisée de browsing et des versions d'un film déterminé sont enregistrés dans une mémoire d'archivage en plus des données vidéo et audio ainsi que des prescriptions pour les processus et paramètres de traitement.

10. Procédé selon la revendication 9,
**caractérisé en ce**
**que** des listes d'édition des parties du film qui sont prélevées de la mémoire d'archivage en vue de la composition des différentes versions sont établies.
